# EUROPÄISCHE PATENTANMELDUNG

(11) **EP 1 236 590 A1**
(43) Veröffentlichungstag der Anmeldung: **04.09.2002**
(21) Anmeldenummer: 01105093.7
(22) Anmeldetag: 02.03.2001
(51) Int. Cl.: B60D 1/06

(54) **Anhängerkupplung**

(71) Anmelder: Cramer Kupplung GmbH & Co. KG, 45356 Essen (DE)
(72) Erfinder: Afflerbach, Henning F., Dipl.-Ing., 44227 Dortmund (DE); Staude, Rudolf, Dipl.-Ing., 42111 Wuppertal (DE)
(74) Vertreter: Honke, Manfred, Dr.-Ing.

(57) **Zusammenfassung**

Es handelt sich um eine Anhängerkupplung für Zugfahrzeuge mit einer an dem Zugfahrzeug befestigten Kupplungskugel (1) und einer an einem Anhänger befestigten die Kupplungskugel überfassenden Kupplungspfanne (2). Die Kupplungspfanne (2) ist mit einem Niederhalter (3) gegen die Kupplungskugel (1) drückbar. Dabei ist die Kupplungspfanne (2) als Adapter ausgebildet und lösbar an einer Zugöse (4) des Anhängers befestigt. Dazu ist an die Kupplungspfanne (2) ein Befestigungsbolzen (5) angeschlossen, welcher zur Befestigung der Kupplungspfanne (2) in die Zugöse (4) einsteckbar ist und diese durchgreift.

## Beschreibung

Die Erfindung betrifft eine Anhängerkupplung für Zugfahrzeuge mit einer an dem Zugfahrzeug befestigten Kupplungskugel und einer an einem Anhänger befestigten die Kupplungskugel überfassenden Kupplungspfanne, welche mit einem Niederhalter gegen die Kupplungskugel drückbar ist.

Derartige Anhängerkupplungen sind bekannt (vgl. AT-Patentanmeldung A 778/99). Sie ermöglichen ein An- und Abkuppeln des Anhängers bei vergleichsweise großen Schwenkwinkeln zwischen der Deichsel und der Längsachse des Zugfahrzeuges. Die möglichen Schwenkbewegungen der Kupplungspfanne bzw. Kugelpfanne gegenüber der Kupplungskugel sowohl um eine vertikale als auch um eine horizontale Schwenkachse stellen außerdem vorteilhafte Voraussetzungen für Geländefahrten sicher. Dazu kommt ein durch die Selbstzentrierung der Kugelpfanne vereinfachter Kuppelvorgang.

Bei der bekannten Anhängerkupplung der eingangs beschriebenen Ausführungsform ist die Kupplungspfanne mit Hilfe einer Anschlussplatte an der Deichsel des Anhängers befestigt, und zwar mittels Schrauben, für die in der Anschlussplatte Durchtrittslöcher vorgesehen sind. Das bedeutet, dass die Anhänger bzw. zumindest deren Deichseln speziell für die Verwendung an Zugfahrzeugen mit einer Kugelkopfkupplung ausgerüstet sein müssen.

Außerdem kennt man herkömmliche Anhängerkupplungen mit einem in einem Kupplungsmaul des Zugfahrzeuges geführten Kupplungsbolzen, sowie einer am Anhänger befestigten Zugöse, welche in das Kupplungsmaul einfahrbar ist und dabei vom Kupplungsbolzen durchgriffen wird. Derartige Anhänger mit Zugöse lassen sich nicht oder zumindest nicht ohne aufwendige Umrüstarbeiten an Zugfahrzeuge mit Kupplungskugel ankuppeln. - Hier setzt die Erfindung ein.

Der Erfindung liegt die Aufgabe zugrunde, eine Anhängerkupplung der eingangs beschriebenen Ausführungsform zu schaffen, welche universell einsetzbar ist und eine einfache Anpassung an verschiedene Anhänger ermöglicht sowie zugleich für hohe Zug- und Stützlasten geeignet ist.

Diese Aufgabe wird im Rahmen der Erfindung dadurch gelöst, dass die Kupplungspfanne als Adapter ausgebildet und lösbar an einer Zugöse des Anhängers befestigt ist. Damit entfallen aufwendige Umrüstarbeiten am Anhänger. Vielmehr wird die Kupplungspfanne einfach an der ohnehin vorhandenen Zugöse eines herkömmlichen Anhängers befestigt, so dass der Anhänger dann zusammen mit Zugfahrzeugen mit Kugelkopfkupplung verwendet werden kann. Die Befestigung der Kupplungspfanne an der Zugöse erfolgt dabei lösbar, so dass die Kupplungspfanne bei Bedarf auf einfache Weise wieder entfernt werden kann und der Anhänger wieder für herkömmliche Kupplungssysteme mit Kupplungsmaul zur Verfügung steht.

Nach bevorzugter Ausführungsform ist an die Kupplungspfanne ein Befestigungsbolzen angeschlossen, welcher zur Befestigung der Kupplungspfanne in die Zugöse einsteckbar ist und diese durchgreift. Befestigungsbolzen und Kupplungspfanne bilden dabei einen Adapter, der in die Zugöse eingesteckt und in dieser befestigt wird. Dieser Adapter ermöglicht demnach die Verbindung von Zugfahrzeugen mit Kugelkopfkupplung einerseits und Anhängern mit herkömmlicher Zugöse andererseits. Durch geeignete Wahl des Durchmessers des Befestigungsbolzens lässt sich die Kupplungspfanne damit an Zugösen mit unterschiedlichstem Innendurchmesser befestigen. Sind entsprechend verschiedene Adapter (bestehend aus Kupplungspfanne und daran angeschlossenem Befestigungsbolzen) vorhanden, so kann jede beliebige Zugöse verwendet werden. Der Austausch des Adapters ist einfach und kann in kurzer Zeit bewältigt werden, außerdem können durch die Verwendung eines solchen Adapters als Zwischenstück zwischen Zugöse und Kugelkopf beliebige Werkstoffpaarungen zwischen Kupplungskugel und Adapter ohne Einschränkung der Belastbarkeit realisiert werden. Dabei ist das System besonders geeignet für schwere Lasten mit tiefer Anhängung wie z. B. für Güllefahrzeuge und andere schwere Anhänger sowie für Starrdeichselanhänger mit verhältnismäßig hohen Stützlasten. Denn die Anhängerkupplung ist auch für Stützlasten größer 2 t geeignet. Die maximale Belastbarkeit der erfindungsgemäßen Kugelkopf-Adapter-Kupplung ist durch die maximale Belastbarkeit der Zugösen festgelegt. Die Kupplung weist aus konstruktiven Gründen selbst keine Beschränkung für die Stützlasten auf. Außerdem erlaubt die Konstruktion die für die Homologation vorgeschriebene volle Beweglichkeit der Zugösen um ihre vertikale und horizontale Schwenkachse, d. h. in allen Richtungen.

Zur Sicherung des Befestigungsbolzens in der Zugöse weist der Befestigungsbolzen an seinem der Kupplungspfanne abgewandten Ende eine Sicherungsvorrichtung auf. Diese weist beispielsweise eine auf den Befestigungsbolzen aufsteckbare Sicherungsscheibe auf, welche z. B. mit einem Sicherungsring an dem Befestigungsbolzen fixierbar ist. Im Zuge der Montage des Adapters bzw. der Kugelpfanne an der Zugöse lässt sich folglich der Befestigungsbolzen von unten durch die Zugöse durchstecken und dann von oben mit der Sicherungsscheibe sichern.

Der Niederhalter ist erfindungsgemäß als gabelförmiger, C-förmiger oder U-förmiger Niederhalter ausgebildet, welcher die Kugelpfanne mit seinen Niederhalteschenkeln übergreift. Dabei ist der Abstand der Niederhalteschenkel um ein vorgegebenes Maß größer als der Außendurchmesser der Zugöse. Auf diese Weise wird erreicht, dass sich der Niederhalter nach Auflegen der Kupplungspfanne auf den Kugelkopf einwandfrei auf die Kupplungspfanne absenken lässt, ohne dass die Zugöse des Anhängers diesen Vorgang behindert. Im Ergebnis wird - trotz der hohen Flexibilität des Systems - eine praktisch spielfreie Verbindung zwischen Zugfahrzeug und Anhänger ermöglicht.

Die Kupplungskugel ist nach bevorzugter Ausführungsform auf einer an dem Zugfahrzeug befestigten Kupplungsplatte angeordnet, vorzugsweise auf diese Kupplungsplatte aufgeschweißt. Dabei kann die Kupplungsplatte höhenverstellbar an dem Anhänger befestigt sein. Um den Einsatz der Anhängerkupplung auch bei Zugfahrzeugen mit herkömmlichen Kupplungen mit Anhängeböcken zu ermöglichen, ist vorgesehen, dass die Kupplungsplatte höhenverstellbar in einem Anhängebock des Zugfahrzeuges durch entsprechende Ansteckbolzen befestigt ist.

Außerdem ist der Niederhalter um eine lösbare Schwenkachse verschwenkbar an dieser Kupplungsplatte bzw. Kugelkopfplatte befestigt und mit einem Niederhaltebolzen in der Niederhalteposition fixierbar. Zur Sicherung des Niederhaltebolzens dient z. B. ein Feder- bzw. Klappstecker.

Im Folgenden wird die Erfindung anhand einer lediglich ein Ausführungsbeispiel darstellenden Zeichnung näher erläutert. Es zeigen
- Fig. 1: eine erfindungsgemäße Anhängerkupplung in perspektivischer Darstellung,
- Fig. 2: den Gegenstand nach Fig. 1 in einer Seitenansicht,
- Fig. 3: den Gegenstand nach Fig. 1 in der Draufsicht,
- Fig. 4: eine separate Kupplungsplatte (Kugelkopfträgerplatte) mit Kupplungskugel in abgewandelter Ausführungsform,
- Fig. 5: den Gegenstand nach Fig. 4 in der Draufsicht und
- Fig. 6: den Gegenstand nach Fig. 4 in der Seitenansicht.

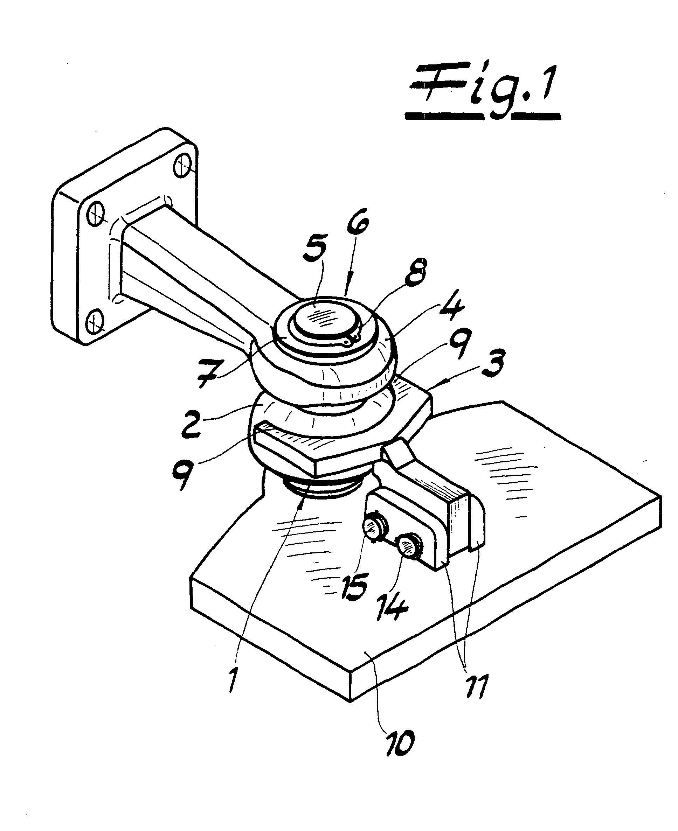

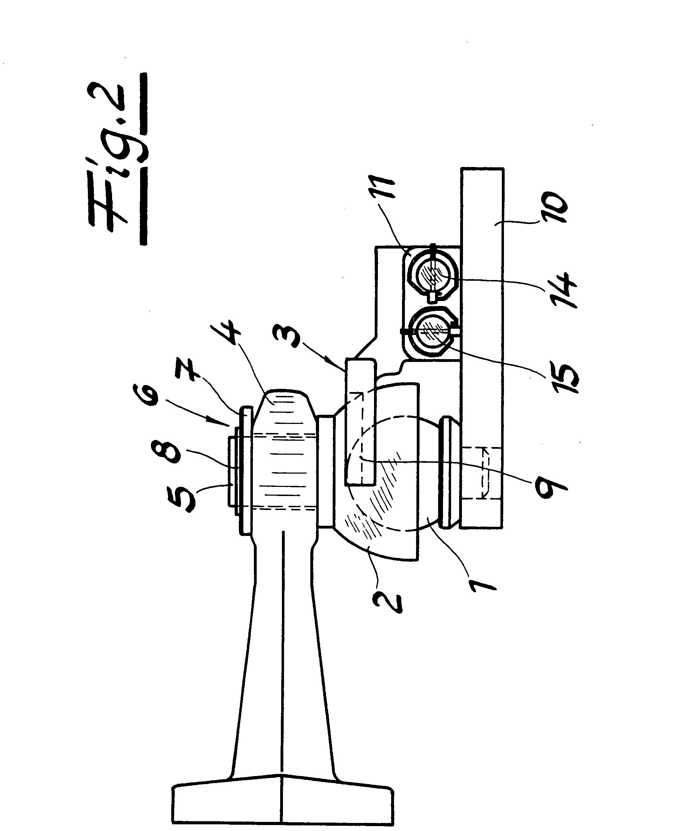

In den Figuren 1 und 2 ist eine Anhängerkupplung für Zugfahrzeuge mit einer an dem Zugfahrzeug befestigten Kupplungskugel 1 und einer an einem Anhänger befestigten die Kupplungskugel 1 überfassenden Kupplungspfanne 2 dargestellt. Dabei zeigen die Figuren 1 und 2 die Anhängerkupplung in angekuppeltem Zustand, in welchem das Zugfahrzeug mit dem Anhänger über die Anhängerkupplung verbunden ist. In diesem Zustand drückt ein Niederhalter 3 die Kupplungspfanne 2 gegen die Kupplungskugel 1.

Die Kupplungspfanne 2 ist erfindungsgemäß lösbar an einer Zugöse 4 des Anhängers befestigt. Dazu ist an die Kupplungspfanne 2 ein Befestigungsbolzen 5 angeschlossen, welcher zur Befestigung der Kupplungspfanne 2 in die Zugöse 4 eingesteckt wird und diese dabei durchgreift. Kupplungspfanne 2 und Befestigungsbolzen 5 bilden demnach ein einziges Bauteil, welches die Funktion eines Adapters übernimmt, mit welchem sich die Zugöse 4 mit der Kupplungskugel 1 verbinden lässt.

Zur Sicherung des Befestigungsbolzens 5 in der Zugöse 4 ist der Befestigungsbolzen 5 an seinem der Kupplungspfanne 2 abgewandten Ende mit einer Sicherungsvorrichtung 6 ausgerüstet. Diese Sicherungsvorrichtung 6 weist eine auf den Befestigungsbolzen 5 aufsteckbare Sicherungsscheibe 7 auf, welche mit einem Sicherungsring 8 an dem Befestigungsbolzen 5 fixierbar ist. Dazu wird insbesondere auf Figur 2 verwiesen.

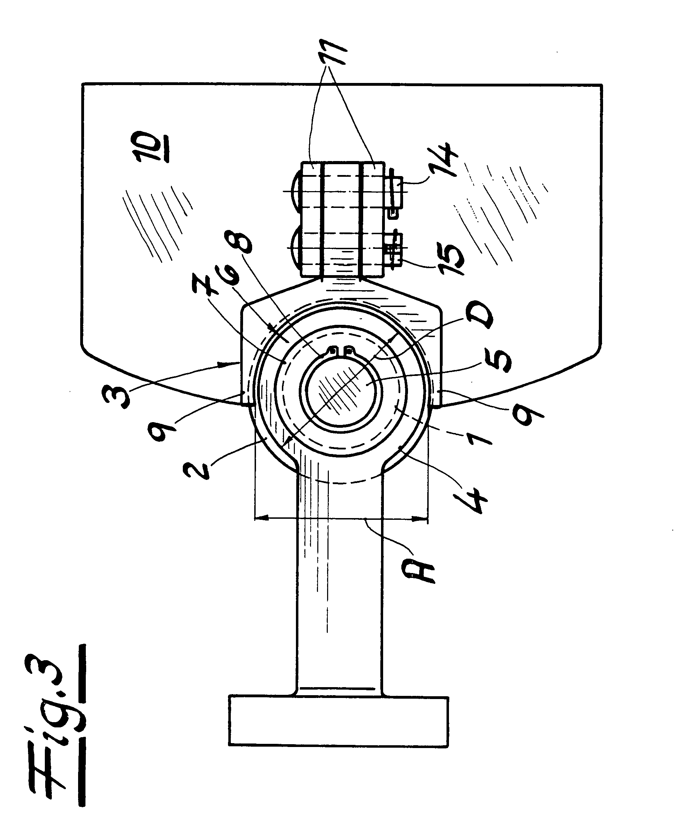

Der Niederhalter 3 ist als gabelförmiger bzw. C-förmiger oder U-förmiger Niederhalter 3 ausgebildet. Dieses ist insbesondere den Figuren 1 und 3 zu entnehmen. Dabei übergreift der Niederhalter 3 die Kupplungspfanne 2 mit seinen beiden Niederhalteschenkeln 9. Der Abstand A der Niederhalteschenkel 9 ist um ein vorgegebenes Maß größer als der Außendurchmesser D der Zugöse 4.

Im Einzelnen erfolgt die Montage und der Kupplungsvorgang wie folgt:

Soll ein herkömmlicher Anhänger mit Zugöse 4 an ein Zugfahrzeug mit Kupplungskugel 1 angekuppelt werden, so wird zunächst der erfindungsgemäße Adapter 2, 5 mit der Kupplungspfanne 2 an der Zugöse 4 befestigt. Dazu wird der Befestigungsbolzen 5 von unten durch die Zugöse 4 gesteckt und mit der Sicherungsvorrichtung 6, bestehend aus Sicherungsscheibe 7 und Sicherungsring 8, fixiert. Anschließend lässt sich dann die Zugöse 4 mit dem Adapter 2, 5 und folglich mit der Kugelpfanne 2 auf die Kupplungskugel 1 auflegen. Das bedeutet, das eigentliche Kuppeln erfolgt durch Auflegen der Zugöse 4 mit montiertem Adapter 2, 5 auf den Kugelkopf bzw. auf die Kupplungskugel 1. Anschließend erfolgt dann das Verriegeln der Anhängerkupplung durch Absenken des Niederhalters 3 auf die äußere Kugelschalenfläche des Adapters 2, 5. Diese gesicherte Position ist in den Figuren 1 und 2 dargestellt.

Die Kupplungskugel 1 ist auf einer an dem Zugfahrzeug befestigten Kupplungsplatte 10 angeordnet, und zwar auf diese Kupplungsplatte 10 aufgeschweißt. Diese Kupplungsplatte 10 kann auch höhenverstellbar an dem Anhänger befestigt sein. Dieses ist in den Figuren 1 bis 3 nicht erkennbar.

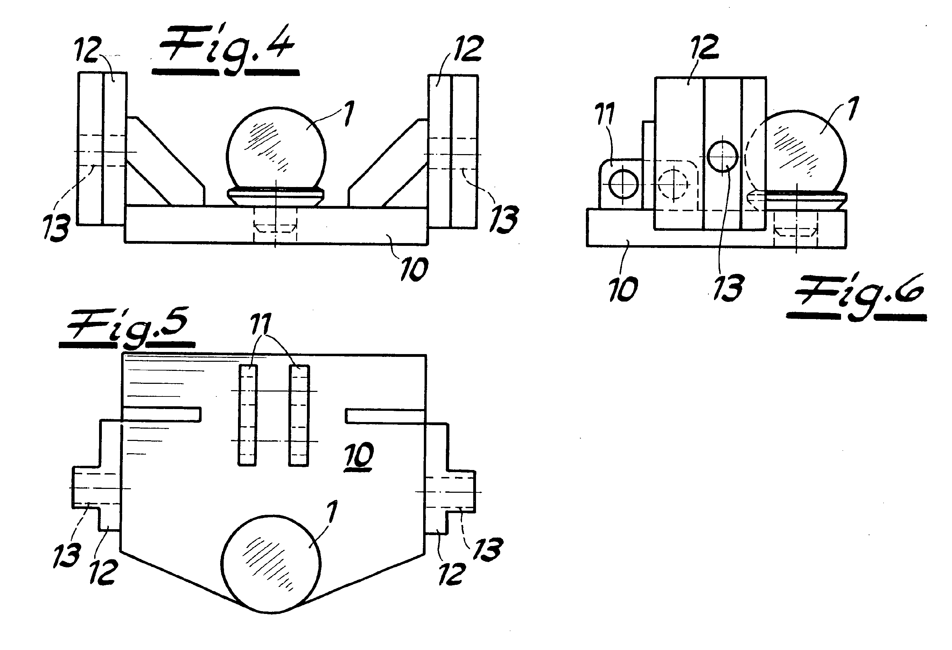

Eine an einem Anhängebock des Anhängers höhenverstellbar befestigbare Kupplungsplatte 10 ist in den Figuren 4 bis 6 dargestellt. Man erkennt die Kupplungsplatte 10 mit aufgeschweißter Kupplungskugel 1 sowie die beiden Befestigungsstege 11 für den Niederhalter 3. Zur Befestigung der Kupplungsplatte 10 an den Anhängebock sind beidseitig Montageplatten 12 an die Kupplungsplatte 10 angeschweißt, welche mit entsprechenden Bohrungen 13 versehen sind, durch welche sich dann Ansteckbolzen hindurchstecken lassen. Die Ansteckbolzen selbst sind wie auch der Anhängebock nicht dargestellt.

Im Übrigen ist der Niederhalter 3 verschwenkbar an der Kupplungsplatte 10 befestigt. Dazu wird noch einmal auf die Figuren 1 bis 3 verwiesen. Im Einzelnen ist der Niederhalter 3 um einen lösbaren Schwenkbolzen 14 verschwenkbar und mit einem Niederhaltebolzen 15 in der Niederhalteposition fixierbar. Diese Niederhalteposition ist beispielsweise in den Figuren 1 und 2 dargestellt. Durch Entfernen sowohl des Niederhaltebolzens 15 als auch des Schwenkbolzens 14 lässt sich der Niederhalter 3 im Zuge der Demontage vollständig von der Kupplungsplatte 10 entfernen (vgl. z. B. Figur 5).

## Patentansprüche

1. Anhängerkupplung für Zugfahrzeuge mit einer an dem Zugfahrzeug befestigten Kupplungskugel (1) und einer an einem Anhänger befestigten die Kupplungskugel (1) überfassenden Kupplungspfanne (2), welche mit einem Niederhalter (3) gegen die Kupplungskugel (1) drückbar ist, **dadurch gekennzeichnet, dass** die Kupplungspfanne (2) als Adapter ausgebildet und lösbar an einer Zugöse (4) des Anhängers befestigt ist.

2. Anhängerkupplung nach Anspruch 1, **dadurch gekennzeichnet, dass** an die Kupplungspfanne (2) ein Befestigungsbolzen (5) angeschlossen ist, welcher zur Befestigung der Kupplungspfanne (2) in die Zugöse (4) einsteckbar ist und diese durchgreift.

3. Anhängerkupplung nach Anspruch 2, **dadurch gekennzeichnet, dass** der Befestigungsbolzen (5) an seinem der Kupplungspfanne (2) abgewandten Ende eine Sicherungsvorrichtung (6) zur Sicherung des Befestigungsbolzens (5) in der Zugöse (4) aufweist.

4. Anhängerkupplung nach Anspruch 3, **dadurch gekennzeichnet, dass** die Sicherungsvorrichtung (6) zumindest eine auf den Befestigungsbolzen (5) aufsteckbare Sicherheitsscheibe (7) aufweist, welche z. B. mit einem Sicherungsring (8) an dem Befestigungsbolzen (5) fixierbar ist.

5. Anhängerkupplung nach einem der Ansprüche 1 bis 4, **dadurch gekennzeichnet, dass** der Niederhalter (3) als gabelförmiger, C-förmiger oder U-förmiger Niederhalter (3) ausgebildet ist, welcher die Kupplungspfanne (2) mit seinen Niederhalteschenkeln (9) beidseitig übergreift und auf der Kupplungsplatte (fahrzeugseitig) befestigt ist.

6. Anhängerkupplung nach Anspruch 5, **dadurch gekennzeichnet, dass** der Abstand (A) der Niederhalteschenkel (9) um ein vorgegebenes Maß größer ist als der Außendurchmesser (D) der Zugöse (4).

7. Anhängerkupplung nach einem der Ansprüche 1 bis 6, **dadurch gekennzeichnet, dass** die Kupplungskugel (1) auf einer an dem Zugfahrzeug befestigten Kupplungsplatte (10) angeordnet ist, vorzugsweise auf die Kupplungsplatte (10) aufgeschweißt ist.

8. Anhängerkupplung nach Anspruch 7, **dadurch gekennzeichnet, dass** die Kupplungsplatte (10) höhenverstellbar an dem Anhänger befestigt ist.

9. Anhängerkupplung nach Anspruch 8, **dadurch gekennzeichnet, dass** die Kupplungsplatte (10) höhenverstellbar an einem Anhängebock des Anhängers befestigt ist.

10. Anhängerkupplung nach einem der Ansprüche 7 bis 9, **dadurch gekennzeichnet, dass** der Niederhalter (3) um einen lösbaren Schwenkbolzen (14) verschwenkbar an der Kupplungsplatte (10) befestigt und mit einem Niederhaltebolzen (15) in der Niederhalteposition fixierbar ist.
